# EUROPEAN PATENT APPLICATION

(11) **EP 4 620 580 A1**
(43) Date of publication of application: **24.09.2025**
(21) Application number: 23890253.0
(22) Date of filing: 12.07.2023
(51) Int. Cl.: B05D 3/02, B05D 3/04, H01M 4/139

(54) **HEATING PLATE AND COATER OVEN**

(30) Priority: 16.11.2022 CN 202223051773 U
(71) Applicant: BYD Company Limited, Shenzhen, Guangdong 518118 (CN)
(72) Inventor: WANG, Liang, Shenzhen, Guangdong 518118 (CN); LIU, Ke, Shenzhen, Guangdong 518118 (CN); JIN, Gangwei, Shenzhen, Guangdong 518118 (CN); ZHANG, Jianchang, Shenzhen, Guangdong 518118 (CN); GU, Chengyan, Shenzhen, Guangdong 518118 (CN)
(74) Representative: Mathys & Squire
(86) International application number: PCT/CN2023/107044
(87) International publication number: WO 2024/103811

(57) **Abstract**

A heating plate (50) and a coater oven (100). The heating plate (50) is used for heating an electrode sheet (60), and comprises first infrared plates (51) and second infrared plates (52); the first infrared plates (51) and the second infrared plates (52) are sequentially arranged in a first direction, each first infrared plate (51) comprises a first edge (511) in a second direction, each second infrared plate (52) comprises a second edge (521) corresponding to the first edge (511) in the second direction, and the first edge (511) and the second edge (521) are arranged in offset positions in the first direction; the electrode sheet (60) is configured to move in the first direction, the length direction of the electrode sheet (60) is the first direction, and the width direction thereof is the second direction.

## Description

### CROSS-REFERENCE TO RELATED APPLICATIONS

The present disclosure claims priority to Chinese Patent Application No. 202223051773.1, entitled "HEATING PLATE AND COATER OVEN", and filed on November 16, 2022, which is incorporated herein by reference in its entirety.

### FIELD

The present disclosure relates to the field of lithium-ion battery electrode manufacturing technologies, and specifically, to a heating plate and a coater oven.

### BACKGROUND

Currently, mainstream manufacturing processes for electrodes of lithium-ion batteries include a wet mixing process, a coating process, or a baking process, and the baking process is mainly performed by using a coater oven. In some coater ovens, an electrode sheet is baked and dried through hot air, resulting in a low energy efficiency, a low baking rate, and a poor quality electrode sheet. In some other coater ovens, the electrode sheet is baked and dried through hot air and heated through infrared radiation. This manner has many advantages compared with the solution of simply baking and drying the electrode sheet through hot air.

In a current infrared solutions, an infrared lamp is mainly used as a baking infrared source. A large number of infrared lamps need to be arranged on a coater. In addition, the infrared lamps have a short lifespan and high operating temperatures. Therefore, an apparatus for cooling the lamps and an apparatus for monitoring the temperature of the lamps needs to be additionally configured, resulting in high costs. In the latest infrared plate solution, a plate infrared source is used, which offers low costs, a long lifespan, and low operating temperatures compared with the lamp-based form, making it a technology that is gradually gaining increasing attention in the industry.

However, in the current infrared plate solutions, a plurality of infrared plates of the same specification are spliced. Consequently, splicing joints are at the same position. During baking, the phenomena of lack of baking and insufficient baking exist at corresponding joints. Consequently, solvent residue of the electrode sheet is high, and the residue is unstable, resulting in unstable battery performance.

### SUMMARY

The present disclosure provides a heating plate and a coater oven, to resolve technical existing problems of lack of baking and insufficient baking of an oven when an infrared plate solution is used.

To resolve the foregoing technical problems, the present disclosure provides the following technical solutions.

According to a first aspect, the present disclosure provides a heating plate. The heating plate is configured to heat an electrode sheet, and the heating plate includes a first infrared plate and a second infrared plate; and the first infrared plate and the second infrared plate are sequentially arranged along a first direction, the first infrared plate has a first edge in a second direction, the second infrared plate has a second edge corresponding to the first edge in the second direction, and the first edge and the second edge are offset in the first direction. The electrode sheet is configured to move in the first direction, wherein a length direction of the electrode sheet is the first direction, and a width direction of the electrode sheet is the second direction.

In an embodiment, in the second direction, one first infrared plate is provided, a plurality of second infrared plates are provided, the plurality of second infrared plates are sequentially spliced in the second direction, and a size of the first infrared plate in the second direction is equal to a total size of the plurality of second infrared plates in the second direction.

In an embodiment, in the second direction, a plurality of first infrared plates and second infrared plates that have unequal quantities are provided, the plurality of first infrared plates are sequentially spliced in the second direction, the plurality of second infrared plates are sequentially spliced in the second direction, and a total size of the plurality of first infrared plates in the second direction is equal to a total size of the plurality of second infrared plates in the second direction.

In an embodiment, an edge of the first infrared plate at the outermost side in the second direction is flush and coplanar with a corresponding edge of the second infrared plate.

In an embodiment, the first infrared plate and the second infrared plate are provided with a gap configured to arrange an air nozzle in the first direction.

In an embodiment, the first infrared plate and the second infrared plate are connected in the first direction to form an infrared plate group, the heating plate is provided with a plurality of infrared plate groups along the first direction, and a gap configured to arrange an air nozzle is provided between adjacent infrared plate groups.

In an embodiment, each infrared plate group includes the first infrared plate and the second infrared plate alternately arranged in the first direction.

In an embodiment, the first infrared plate and the second infrared plate in each infrared plate group are detachably connected in the first direction.

In an embodiment, a plurality of first infrared plates are provided, and the plurality of first infrared plates are detachably connected in the second direction; and/or a plurality of second infrared plates are provided, and the plurality of second infrared plates are detachably connected in the second direction.

In an embodiment, a length direction of the first infrared plate is the first direction or the second direction.

According to a second aspect, the present disclosure further provides a coater oven, the coater oven including: a tank, having an accommodating cavity; an upper plenum and a lower plenum, the upper plenum and the lower plenum being oppositely accommodated in the accommodating cavity; and the heating plate according to any one of the various implementations of the first aspect, the heating plate being arranged between the upper plenum and the lower plenum.

In an embodiment, a surface of the upper plenum facing the lower plenum is provided with a plurality of air nozzles arranged and spaced apart, a surface of the lower plenum facing the upper plenum is provided with a plurality of air nozzles arranged and spaced apart, and the heating plate is arranged between two adjacent air nozzles on the upper plenum and/or between two adjacent air nozzles on the lower plenum.

In an embodiment, the plurality of air nozzles on the upper plenum and the plurality of air nozzles on the lower plenum are offset in an upper-lower direction.

In an embodiment, an interval between two adjacent air nozzles is equal in the first direction.

In an embodiment, the coater oven is provided with an input hole (12) and an output hole (13) extending between the inside and the outside; and an electrode sheet enters the accommodating cavity through the input hole, and exits from the output hole after being baked.

According to the heating plate provided in the present disclosure, the first infrared plate and the second infrared plate are sequentially arranged in the first direction, and the first edge of the first infrared plate and the second edge of the second infrared plate are offset in the first direction, so that when the electrode sheet moves in the first direction, an unheated and unbaked part of the electrode sheet at one of the infrared plates can be heated and baked at the next infrared plate. Therefore, the problems of lack of baking and insufficient baking caused by the unheated and unbaked part of the electrode sheet that cannot be heated and baked at all are avoided, a problem of high and unstable solvent residue of the electrode sheet is resolved, and the stability of battery performance can be improved.

### BRIEF DESCRIPTION OF THE DRAWINGS

To describe the technical solutions of the implementations of the present disclosure or the related art more clearly, the following briefly introduces accompanying drawings required for describing the implementations or the related art. It will be appreciated that, the accompanying drawings in the following descriptions show only some implementations of the present disclosure, and a person of ordinary skill in the art may still derive other drawings from these accompanying drawings without creative efforts.
FIG. 1 is a cross-sectional view of a coater oven according to an embodiment;
FIG. 2 is a plane view of a heating plate according to an embodiment;
FIG. 3 is a plane view of a heating plate according to an embodiment;
FIG. 4 is a plane view of a heating plate according to an embodiment;
FIG. 5 is a plane view of a heating plate according to an embodiment;
FIG. 6 is a side view of a heating plate according to an embodiment;
FIG. 7 is a side view of a heating plate according to an embodiment; and
FIG. 8 is a plane view of a heating plate according to an embodiment.

In the drawings:
100: coater oven; 10: tank; 11: accommodating cavity; 12: input hole; 13: output hole; 14: leg; 15: bracket; 21: upper plenum; 22: lower plenum; 30: air nozzle; 40: air channel; 50: heating plate; 51: first infrared plate; 511: first edge; 512: third edge; 513: first terminal; 514: second terminal; 515: first groove; 516: second protrusion; 517: third protrusion; 52: second infrared plate; 521: second edge; 522: fourth edge; 523: third terminal; 524: fourth terminal; 525: first protrusion; 526: second groove; 527: third groove; and 60: electrode sheet.

### DETAILED DESCRIPTION

The following clearly and completely describes the technical solutions in the implementations of the present disclosure with reference to the accompanying drawings in the implementations of the present disclosure. It is clear that the described implementations are only some of the implementations of the present disclosure rather than all of the implementations. All other implementations obtained by a person of ordinary skill in the art based on the implementations of the present disclosure without creative efforts shall fall within the protection scope of the present disclosure.

It should be noted that, when a component is referred to as "being fixed to" another component, the component may be directly on another component, or there may be an intermediate component. When a component is considered to be "connected to" another component, the component may be directly connected to another component or an intermediate component may exist simultaneously.

Unless otherwise defined, meanings of all technical and scientific terms used in the present disclosure are the same as those usually understood by a person skilled in the art to which the present disclosure belongs. In the present disclosure, terms used in the specification are merely intended to describe specific embodiments, but are not intended to limit the present disclosure. The term "and/or" used in the present disclosure includes any or all combinations of one or more related listed items.

The following describes some implementations of the present disclosure in detail with reference to the accompanying drawings. In a case of no conflict, the following embodiments and features of the embodiments may be combined with each other.

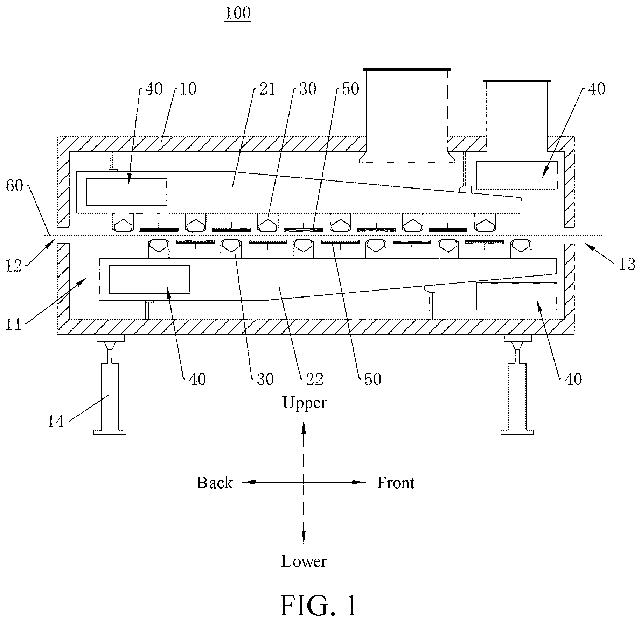

Referring to FIG. 1, a coater oven 100 provided in the embodiments of the present disclosure includes a tank 10, an upper plenum 21, and a lower plenum 22.

For example, the tank 10 is of a cuboid structure. The tank 10 has an accommodating cavity 11. The upper plenum 21 and the lower plenum 22 are oppositely accommodated in the accommodating cavity 11. The upper plenum 21 and the lower plenum 22 are arranged spaced away.

An air channel 40 is further arranged in the tank 10. The air channels 40 may be partially arranged in the upper plenum 21 and the lower plenum 22, and may be partially arranged outside the upper plenum 21 and the lower plenum 22. As shown in FIG. 1, the air channel 40 is arranged in the upper plenum 21, an outer side of the upper plenum 21 is provided with the air channel 40, the air channel 40 is also arranged in the lower plenum 22, and an outer side of the lower plenum 22 is provided with the air channel 40. The air channels 40 at various positions may be in communication with each other.

The tank 10 is provided with an input hole 12 and an output hole 13 extending between the inside and the outside, and positions of the input hole 12 and the output hole 13 correspond to a gap between the upper plenum 21 and the lower plenum 22. The tank 10 is further connected to multiple legs 14, and the legs 14 are fixed on the ground or another bench. The leg 14 may be of a retractable structure, and can adjust a height of the tank 10.

During operation of the coater oven 100, an electrode sheet 60 enters the accommodating cavity 11 through the input hole 12, and air supplied by the air channel 40 flows out through the upper plenum 21 and the lower plenum 22, so that the electrode sheet 60 is in a floating state between the upper plenum 21 and the lower plenum 22 without being in contact with another structure. The electrode sheet 60 exits from the output hole 13 after being baked.

In a current baking solution of the oven, the electrode sheet 60 is baked through hot air. Specifically, natural gas is burned to heat hot oil, then the hot oil passes through a heat exchanger to heat air, the hot air passes through a circulation fan to form hot air, and finally, the electrode sheet 60 is baked and dried through the hot air. This baking solution has three significant disadvantages: (1) Energy efficiency is low. When the electrode sheet 60 is baked through the hot air, the entire oven tank 10 is inevitably heated, and a surface of the tank 10 is seriously heated. In addition, after the electrode sheet 60 is heated through the hot air, waste heat is recovered through a waste heat recovery system. This is limited by waste heat recovery efficiency, and most of the heat of the hot air is lost. Consequently, the energy efficiency of the current coater oven 100 is very low, which is in a range of only 10% to 30%. (2) A baking rate is low. Heating of the electrode sheet 60 through the hot air is by contact and current heating, and heat transfer efficiency is low. A rate at which the electrode sheet 60 is completely baked and dried reaches a bottleneck, and it is difficult to further increase a conveyor belt speed (a speed of a positive electrode is 60 m/min, and a speed of a negative electrode is 70 m/min), which severely hinders capability improvement. (3) The quality of the electrode sheet 60 is poor. Because heating of the electrode sheet 60 through the hot air is by contact heating, in a heating process, a surface temperature of the electrode sheet 60 is much higher than an internal temperature of the electrode sheet 60. Consequently, internal stress of the electrode sheet 60 is high, causing cracking of the electrode sheet 60. In addition, a surface solvent of the electrode sheet 60 is dried rapidly, causing an adhesive to float, resulting in peeling and falling of the electrode sheet 60.

To resolve the foregoing problems, it is necessary to develop a new technology of coater oven 100. As a high-efficient non-contact heating manner, infrared heating has been widely used in various aspects of industrial manufacturing. Through high efficiency (theoretically, energy utilization efficiency is as high as 70%) of the infrared heating, energy consumption of the coater oven 100 can be effectively reduced, so that an energy consumption cost is reduced. In addition, the infrared heating belongs to thermal radiation heating transfer, heating transfer efficiency is high, and a baking and drying speed of the electrode sheet 60 can be clearly increased, so that capacity (it is predicted that the conveyor belt speed is increased by a range of 10 m/min to 30 m/min) is improved. More importantly, because of high-transparency performance of an infrared ray, an inside and an outside of the electrode sheet 60 can be heated simultaneously, so that a cracking problem of the electrode sheet 60 is effectively alleviated, a floating problem of the adhesive is alleviated, and a better coating structure and performance are obtained.

Although there are many advantages, currently, an infrared baking technology of the electrode sheet 60 is not widely used in a lithium-ion battery industry. A main reason is that the current industry generally uses an infrared lamp as an infrared source for the oven, and the infrared lamp has clear disadvantages: (1) Price is high. The price of a single lamp is more than 10000 RMB, and 50 to 150 lamps need to be configured for one coater oven 100, causing a high single-use investment cost. (2) Lifespan is short. The lifespan of the infrared lamp is only 10000 h. In other words, the lamp needs to be replaced every year to ensure normal operation of the oven. Consequently, an investment cost is further greatly increased. (3) The infrared lamp has a high temperature (1000 °C to 2000 °C). An air-cooling system needs to be configured to ensure a service lifespan of the lamp. In addition, a rigorous feedback adjustment system needs to be designed, to prevent foil from oxidizing or the electrode sheet 60 from being cracked due to excessive baking. These are not only a further increase the investment cost, but also make the infrared baking technology excessively complex, and mass production risk is high.

To resolve the foregoing problems and make the use of infrared baking technology for the electrode sheet 60 truly practical, in some enterprises in the industry, an infrared plate is used as the infrared source. Advantages of the infrared plate are as follows: (1) Price is low. The price of a single infrared plate is in a range of 500 RMB to 1000 RMB. Compared with the infrared lamp, the single-use investment cost is reduced by approximately 90%. (2) Lifespan is long. The lifespan of the infrared plate reaches 20000 h, and is twice that of the infrared lamp. (3) Temperature of the infrared plate is low (300 °C to 400 °C), a cooling system does not need to be additionally configured, and a feedback adjustment system is correspondingly simple.

In an actual use process, a current infrared plate still has disadvantages. A length of the infrared plate is limited, and an excessively long infrared plate may cause phenomena such as collapsing, bending, and deformation. Therefore, in a current solution of using the infrared plate, a plurality of infrared plates of a same specification are usually spliced. Consequently, splicing joints are at a same position. During baking, phenomena of lack of baking and insufficient baking exist at a position on the electrode sheet 60 corresponding to a joint. Consequently, a solvent residue of the electrode sheet 60 is high, and the residue is unstable, resulting in unstable battery performance.

Therefore, the present disclosure provides an improved solution for the foregoing problems. Referring to FIG. 1, based on the current oven, a heating plate 50 is arranged between the upper plenum 21 and the lower plenum 22. The heating plate 50 may be arranged at any position between the upper plenum 21 and the lower plenum 22, for example, arranged on a lower surface of the upper plenum 21 or an upper surface of the lower plenum 22. A specific design of the heating plate 50 is described in detail in subsequent embodiments. Herein, it is only pointed out that the heating plate 50 can resolve problems that during baking, the phenomena of lack of baking and insufficient baking exist at the position on the electrode sheet 60 corresponding to a joint.

Optionally, still referring to FIG. 1, each of opposite surfaces of the upper plenum 21 and the lower plenum 22 is provided with a plurality of air nozzles 30 arranged and spaced apart, and the heating plate 50 is arranged between two adjacent air nozzles 30 on the upper plenum 21 and/or between two adjacent air nozzles 30 on the lower plenum 22.

Specifically, the lower surface of the upper plenum 21 is provided with the plurality of air nozzles 30 arranged and spaced apart, and a gap between any adjacent air nozzles 30 may be equal. The upper surface of the lower plenum 22 is also provided with the plurality of air nozzles 30 arranged and spaced apart, and a gap between any adjacent air nozzles 30 may be equal. The heating plate 50 may be arranged on the lower surface of the upper plenum 21 and/or the upper surface of the lower plenum 22 at gaps between some or all of the air nozzles 30. Each air nozzle 30 communicates with the air channel 40. Air in the air channel 40 flows out through the air nozzle 30, to floatingly support the electrode sheet 60 and heat the electrode sheet 60.

During use, air flowing out through the air nozzle 30 may be controlled to be air of an ordinary temperature, to only floatingly support the electrode sheet 60, and a function of heating the electrode sheet 60 is implemented through the heating plate 50. To strengthen a baking effect, air flowing out through the air nozzle 30 may alternatively be controlled to be hot air, so that the hot air has a function of floatingly supporting the electrode sheet 60 and heating the electrode sheet 60 simultaneously, and the heating plate 50 also has a function of heating the electrode sheet 60.

Referring to FIG. 1, FIG. 6, and FIG. 7, the heating plate 50 is fixed through a bracket 15. The bracket 15 may be fixed to the upper plenum 21 and/or the lower plenum 22, or may be fixed to any position in the tank 10. A specific structure of the bracket 15 is not limited.

In some embodiments, the electrode sheet 60 is not floatingly supported by air flowing out through the air nozzle 30, but is supported in any other feasible manner. In this case, structures such as the air channel 40 and the air nozzle 30 may not be arranged, and heating and baking are implemented through merely the heating plate 50.

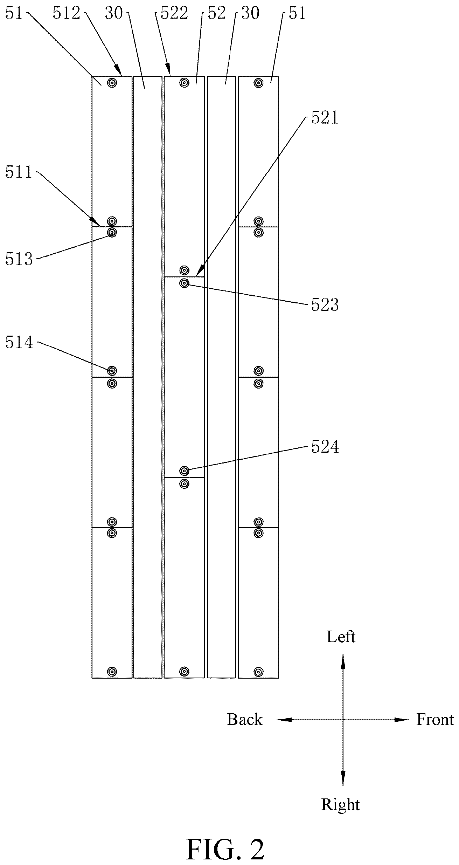

Referring to FIG. 1, a front-back direction and an upper-lower direction are first defined. The front-back direction (also referred to as a "first direction") refers to a movement direction of the electrode sheet 60. The electrode sheet 60 enters the tank 10 from the input hole 12, and is floatingly supported by air flowing out through the air nozzle 30 to exit from the output hole 13. Therefore, a direction of a connection line between the input hole 12 and the output hole 13 is the front-back direction. A side of the output hole 13 is a front direction, a side of the input hole 12 is a back direction, and the front-back direction may be, for example, a horizontal direction. Referring to the electrode sheet 60, a length direction of the electrode sheet 60 is the front-back direction. The upper-lower direction (also referred to as a "third direction") refers to a height direction of the oven. A side of the upper plenum 21 is an upper direction, a side of the lower plenum 22 is a lower direction, the upper-lower direction is perpendicular to the front-back direction, and the upper-lower direction is, for example, a vertical direction. Referring to the electrode sheet 60, a thickness direction of the electrode sheet 60 is the upper-lower direction. With reference to FIG. 1 and FIG. 2, a left-right direction is further defined. A direction of left and right sides in a top view (not shown) of the oven in FIG. 1 is a left-right direction (also referred to as a "second direction"), and the left-right direction is perpendicular to both the front-back direction and the upper-lower direction. Referring to the electrode sheet 60, a width direction of the electrode sheet 60 is the left-right direction.

Referring to FIG. 1, the plurality of air nozzles 30 on the upper plenum 21 and the plurality of air nozzles 30 on the lower plenum 22 are offset in the upper-lower direction. In other words, an air nozzle 30 on the upper plenum 21 and a corresponding air nozzle 30 on the lower plenum 22 are not located on a same straight line in the upper-lower direction. Corresponding to a position between two adjacent air nozzles 30 of the upper plenum 21, one or more air nozzles 30 may be arranged on the lower plenum 22. Similarly, corresponding to a position between two adjacent air nozzles 30 of the lower plenum 22, one or more air nozzles 30 may also be arranged on the upper plenum 21. All the air nozzles 30 on the upper plenum 21 and the lower plenum 22 are sequentially arranged and spaced apart in the front-back direction. Specifically, in the front-back direction, an arrangement manner in which the air nozzles 30 are sequentially arranged one by one may be as follows: the upper plenum 21, one air nozzle 30, the lower plenum 22, one air nozzle 30, the upper plenum 21, one air nozzle 30, ...; an arrangement manner in which the air nozzles 30 are sequentially arranged in groups may be as follows: the upper plenum 21, a plurality of air nozzles 30, the lower plenum 22, a plurality of air nozzles 30, the upper plenum 21, a plurality of air nozzles 30, ...; and there may be other feasible arrangement manners. This is not limited in the present disclosure. All the air nozzles 30 may be arranged at equal intervals in the front-back direction. Regardless of the arrangement manner in which the air nozzles 30 are sequentially arranged one by one, the arrangement manner in which the air nozzles 30 are sequentially arranged in groups, or the any other feasible arrangement manner, a gap between two adjacent air nozzles 30 in the front-back direction is equal. For the two adjacent air nozzles 30: both may be on the upper plenum 21, or both may be on the lower plenum 22, or one is on the upper plenum 21 and the other is on the lower plenum 22.

Through such arrangement, air flowing out through the plurality of air nozzles 30 on the upper plenum 21 and air flowing out through the plurality of air nozzles 30 on the lower plenum 22 are not directly opposite, but are spaced away. The function of floatingly supporting the electrode sheet 60 can be implemented. In addition, when the air is hot air, more positions on the electrode sheet 60 can be heated and baked, so that heating and baking efficiency is improved.

The following describes the heating plate 50 in the embodiments of the present disclosure in detail. The embodiments shown in FIG. 2 to FIG. 8 all have simplified structures, and not all structures such as the air nozzle 30 and the heating plate 50 are shown.

A structure of the infrared plate mainly includes a substrate layer (not shown), a heating layer (not shown), an insulation layer (not shown), and the like that are arranged in a stacked manner. The heating layer is a core structure, and is configured to emit the infrared ray to heat the electrode sheet 60. For a specific structure of the infrared plate, refer to the related art. This is not excessively limited in the present disclosure.

The infrared plate has a positive terminal and a negative terminal, and the positive terminal and the negative terminal are connected to the heating layer to deliver currents. A specific structure of the terminal is not limited in the present disclosure, and various cables configured to be electrically connected to the positive terminal and the negative terminal are also not limited in the present disclosure, and may be set based on an actual requirement.

Currently, a specification of the infrared plate having practical value is as follows: a length of the infrared plate is in a range of 15 cm to 80 cm, where an excessively short length indicates no practical value, and an excessively long length indicates that the infrared plate is prone to deformation, and bending, collapsing, or the like during use; a width of the infrared plate is in a range of 5 cm to 50 cm, where an excessively narrow width indicates no practical value, and an excessively wide width indicates low edge current density and uneven heating; and a height (thickness) of the infrared plate is in a range of 0.5 cm to 3.5 cm, and the height is a thickness that can be achieved at an existing processing level.

Referring to FIG. 2, an embodiment of the present disclosure provides a heating plate 50. The heating plate 50 is configured to heat the electrode sheet 60 (referring to FIG. 1). The heating plate 50 includes a first infrared plate 51 and a second infrared plate 52.

In this embodiment of the present disclosure, the first infrared plate 51 and the second infrared plate 52 both satisfy the foregoing limitations for the structure, specification, and the like of the infrared plate. As shown in FIG. 2, the first infrared plate 51 has a first terminal 513 and a second terminal 514, one of the first terminal 513 and the second terminal 514 is a positive terminal, and the other is a negative terminal. The second infrared plate 52 has a third terminal 523 and a fourth terminal 524, one of the third terminal 523 and the fourth terminal 524 is a positive terminal, and the other is a negative terminal.

With reference to FIG. 1 and FIG. 2, generally, a space of the accommodating cavity 11 of the tank 10 of the coater oven 100 is large, which specifically refers to as a large size in the front-back direction, the left-right direction, and the upper-lower direction, and specifically, a size in the left-right direction is much greater than a length size of the single infrared plate.

To fully improve the baking efficiency, the space should be used as much as possible. Therefore, a solution of splicing a plurality of infrared plates in the left-right direction of the oven is usually used.

In the embodiments of the present disclosure, the first infrared plate 51 and the second infrared plate 52 are sequentially arranged along the front-back direction. The first infrared plate 51 has a first edge 511 in the left-right direction, the second infrared plate 52 has a second edge 521 corresponding to the first edge 511 in the left-right direction, and the first edge 511 and the second edge 521 are offset in the front-back direction.

Specifically, the first infrared plate 51 includes the first edge 511 and a third edge 512 that are opposite, the second infrared plate 52 includes the second edge 521 and a fourth edge 522 that are opposite, the first edge 511 corresponds to the second edge 521, and the third edge 512 corresponds to the fourth edge 522. In the front-back direction, the first edge 511 and the second edge 521 are not on a same straight line.

As shown in FIG. 2, an example in which there are a plurality of first infrared plates 51 and a plurality of second infrared plates 52 is used. In the left-right direction, there are a plurality of first infrared plates 51, and the plurality of first infrared plates 51 are sequentially spliced; and there are also a plurality of second infrared plates 52, and the plurality of second infrared plates 52 are sequentially spliced. The first edge 511 forms a side of a joint between two adjacent first infrared plates 51, and the second edge 521 forms a side of a joint between two adjacent second infrared plates 52.

With reference to FIG. 1 and FIG. 2, after entering the accommodating cavity 11 from the input hole 12 of the oven, the electrode sheet 60 sequentially passes through the plurality of air nozzles 30 and the plurality of heating plates 50 for heating, and then exits from the output hole 13. When the electrode sheet 60 passes through the heating plate 50, a position on the electrode sheet 60 corresponding to the joint between two adjacent first infrared plates 51 is not heated by the first infrared plates 51, causing the phenomena of lack of baking and insufficient baking. When the electrode sheet 60 moves to a position of the second infrared plate 52, a position that is on the electrode sheet 60 and that originally corresponds to the joint of the first infrared plate 51 does not correspond to a position of the joint of two adjacent second infrared plates 52 again, but is directly opposite to the second infrared plate 52. The second infrared plate 52 can heat and bake the position that is on the electrode sheet 60 and that originally corresponds to the joint of the first infrared plate 51. Therefore, the phenomena of lack of baking and insufficient baking existing at the position that is on the electrode sheet 60 and that originally corresponds to the joint of the first infrared plate 51 are eliminated, and problems existing in the related art are resolved.

It may be understood that, a position of the first infrared plate 51 and a position of the second infrared plate 52 in the front-back direction may be changed. One of a quantity of first infrared plates 51 and a quantity of second infrared plates 52 may alternatively be one, and the other is more, or both may be one. In conclusion, a part that is not heated and baked when the electrode sheet 60 passes through one of the infrared plates can be heated and baked when the electrode sheet 60 moves to the next infrared plate, so that the problem of the phenomena of lack of baking and insufficient baking existing in the related art can be resolved.

However, in the related art, different from the embodiments of the present disclosure with reference to FIG. 2, the specifications of the infrared plates are consistent. An example in which a plurality of infrared plates are sequentially arranged in the front-back direction and spliced in the left-right direction is also used. Multiple joints of the plurality of infrared plates in the left-right direction are not offset in the front-back direction, but the plurality of joints are located on a same straight line in the front-back direction. In this way, when the electrode sheet 60 moves in the front-back direction, a position on the electrode sheet corresponding to each joint cannot be heated and baked, causing the phenomena of lack of baking and insufficient baking existing at the position corresponding to the joint.

Therefore, in the embodiments of the present disclosure, the first infrared plate 51 and the second infrared plate 52 are sequentially arranged in the front-back direction, and the first edge 511 of the first infrared plate 51 and the second edge 521 of the second infrared plate 52 are offset in the front-back direction, so that when the electrode sheet 60 moves in the front-back direction, an unheated and unbaked part of the electrode sheet 60 at one of the infrared plates can be heated and baked at the next infrared plate. Therefore, problems of lack of baking and insufficient baking caused by that the unheated and unbaked part of the electrode sheet 60 cannot be heated and baked at all are avoided, a problem of a high and unstable solvent residue of the electrode sheet 60 is resolved, and stability of battery performance can be improved.

In an embodiment, referring to FIG. 2, in the left-right direction, there is one first infrared plate 51, and there are plurality of second infrared plates 52. FIG. 2 shows a structure in which there are a plurality of first infrared plates 51 spliced in the left-right direction. For this embodiment, the plurality of first infrared plates 51 may be replaced with one first infrared plate. The plurality of second infrared plates 52 are sequentially spliced in the left-right direction, and a size of the first infrared plate 51 in the left-right direction is equal to a total size of the plurality of second infrared plates 52 in the left-right direction.

In this embodiment, with reference to FIG. 1 and FIG. 2, the coater oven 100 has various shapes and size specifications. For a specified oven having a small size and a regular shape in the left-right direction, a single infrared plate may be horizontal with a size of the tank 10 in the left-right direction. Therefore, it may be set that one first infrared plate 51 corresponding to a plurality of second infrared plates 52 is sequentially arranged in the front-back direction, and a plurality of first infrared plates 51 are spliced, so that the first infrared plate 51 and the second infrared plate 52 occupy a space in the left-right direction of the accommodating cavity 11 as much as possible, to evenly and comprehensively heat and bake each position on the electrode sheet 60.

It may be understood that, according to the foregoing content, the infrared plate is fixed in the tank 10 through the bracket 15, and when the plurality of second infrared plates 52 are spliced, each second infrared plate 52 may be fixed through the bracket 15, or the plurality of second infrared plates 52 are spliced and fixed first, and then are fixed as a whole through one bracket 15. In conclusion, the plurality of second infrared plates 52 may be spliced in any feasible manner. This is not limited. In this way, a joint between two adjacent second infrared plates 52 in the left-right direction is as small as possible, and even a width of the joint may be 0, so that the two adjacent second infrared plates 52 may be in contact with each other. For the infrared plate, the heating layer of the infrared plate cannot extend to an edge of the infrared plate due to limitation of an internal structural of the infrared plate. Even if the joint between two adjacent second infrared plates 52 is 0, a gap between heating layers actually performing a heating function is still greater than 0. When the electrode sheet 60 passes through the joint, phenomena of partial lack of baking and insufficient baking still exist.

In subsequent embodiments, a manner of splicing a plurality of first infrared plates 51 and a plurality of second infrared plates 52 in the left-right direction is not described in detail below.

In an embodiment, still referring to FIG. 2, there are a plurality of first infrared plates 51 and second infrared plates 52 that have unequal quantities. The plurality of first infrared plates 51 are sequentially spliced in the left-right direction, the plurality of second infrared plates 52 are sequentially spliced in the left-right direction, and a total size of the plurality of first infrared plates 51 in the left-right direction is equal to a total size of the plurality of second infrared plates 52 in the left-right direction.

FIG. 2 shows that there are four first infrared plates 51 sequentially spliced and three second infrared plates 52 sequentially spliced at a position along the left-right direction. Certainly, based on an actual situation, any other feasible splicing quantity may be set.

Specifications of the plurality of spliced first infrared plates 51 are the same, that is, sizes such as lengths, widths, and thicknesses of the plurality of spliced first infrared plates 51 are the same. As shown in FIG. 2, a length direction of the first infrared plate 51 is along the left-right direction, a width direction of the first infrared plate 51 is along the front-back direction, and a thickness direction of the first infrared plate 51 is along the upper-lower direction (referring to FIG. 1, FIG. 6, and FIG. 7). The plurality of first infrared plates 51 are sequentially spliced in the length direction of the first infrared plate 51. A joint between two adjacent first infrared plates 51 in the left-right direction is a joint formed by two opposite edges of the two adjacent first infrared plates 51 in the length direction. The second infrared plates 52 may also be sequentially spliced in a length direction (which may also be the left-right direction) of the second infrared plate 52.

Because the total size of the plurality of spliced first infrared plates 51 is equal to the total size of the plurality of spliced second infrared plates 52, and a quantity of first infrared plates 51 is different from a quantity of second infrared plates 52, evidently, a size (which is a length as shown in FIG. 2) of a single first infrared plate 51 is different from a size of a single second infrared plate 52 in the left-right direction. In this way, the first edge 511 of the first infrared plate 51 and the second edge 521 of the second infrared plate 52 may not completely overlap in the front-back direction, but are offset. The reason is that during splicing, if a joint of the first infrared plate 51 and a joint of the second infrared plate 52 overlap in the front-back direction, because the first infrared plate 51 and the second infrared plate 52 have different lengths (that is, have different sizes in the left-right direction), and sizes of joints are generally the same, it is impossible for all other joints to overlap in the front-back direction, and at least some of the joints are offset.

Because the total size of the plurality of spliced first infrared plates 51 is equal to the total size of the plurality of spliced second infrared plates 52, a space occupied by the plurality of spliced first infrared plates 51 is equal to a space occupied by the plurality of spliced second infrared plates 52, so that a regular accommodating cavity 11 can be accommodated, thereby facilitating even and comprehensive baking of the electrode sheet 60.

In this embodiment, for a common coater oven 100, generally, a size specification of the coater oven is large, and is much greater than a size of the infrared plate, and a length of a single infrared plate cannot be compared with a size of the oven in the left-right direction. Therefore, to occupy space as much as possible, the infrared plates need to be spliced.

In the related art, in the front-back direction, multiple joints formed after splicing overlap instead of being offset. However, in this embodiment, the multiple joints are offset. Therefore, the problems of lack of baking and insufficient baking existing in the related art can be resolved.

Further, referring to FIG. 2, an edge of the first infrared plate 51 at the outermost side in the left-right direction is flush and coplanar with an edge corresponding to the second infrared plate 52.

Specifically, as shown in FIG. 2, the third edge 512 of the first infrared plate 51 at the outermost side is flush and coplanar with the fourth edge 522 of the second infrared plate 52 at the outermost side. When there is only one infrared plate in the left-right direction, for example, when there is one first infrared plate 51 and a plurality of second infrared plates 52 are spliced as described above, the first edge 511 and the third edge 512 of the first infrared plate 51 are respectively flush and coplanar with outer edges (fourth edges 522) of two second infrared plates 52 at the outermost side in the left-right direction. When a plurality of first infrared plates 51 are spliced and a plurality of second infrared plates 52 are spliced in the left-right direction, outer edges (third edges 512) of two first infrared plates 51 at the outermost side in the left-right direction are respectively flush and coplanar with outer edges (fourth edges 522) of two corresponding second infrared plates 52 at the outermost side. In this way, the entire infrared plate forms a rectangular structure in the front-back direction and the left-right direction, and can be adapted to the accommodating cavity 11 in a cuboid shape.

With reference to the descriptions above, the total size of the plurality of spliced first infrared plates 51 is equal to the total size of the plurality of spliced second infrared plates 52 in the left-right direction, and the first infrared plates 51 and the second infrared plates 52 have unequal quantities. In this way, the first edge 511 of the first infrared plate 51 and the second edge 521 of the second infrared plate 52 are inevitably offset in the front-back direction. In other words, joints between the plurality of first infrared plates 51 and joints between the plurality of second infrared plates 52 are inevitably offset in the front-back direction.

For example, as shown in FIG. 2, a length of the first infrared plate 51 is slightly shorter than a length of the second infrared plate 52, that is, the size of the first infrared plate 51 in the left-right direction is less than the size of the second infrared plate 52 in the left-right direction. For a splicing manner with same total lengths, four first infrared plates 51 form three joints, three second infrared plates 52 form two joints, and the three joints formed by the first infrared plates 51 and the two joints formed by the second infrared plates 52 are offset in the front-back direction.

In the front-back direction, the first infrared plate 51 and the second infrared plate 52 are sequentially and alternately arranged. As shown in FIG. 2, the first infrared plate 51, the second infrared plate 52, and the first infrared plate 51 are sequentially arranged in the front-back direction, to form a three-column structure. The infrared plates in the three columns are flush and coplanar as a whole, i.e., edges at the outermost side are flush and coplanar, and the infrared plate in each column is formed through splicing of a plurality of infrared plates. Three joints of the infrared plate (four back spliced first infrared plates 51 in FIG. 2) in a first column and two joints of the infrared plate (three spliced second infrared plates 52 located in the middle in FIG. 2) in a second column are offset in the front-back direction, the two joints of the infrared plate in the second column and three joints of the infrared plate (four front spliced first infrared plates 51 in FIG. 2) in a third column are offset in the front-back direction, and the three joints of the infrared plate in the first column and the three joints of the infrared plate in the third column overlap in the front-back direction.

In this arrangement, in a first aspect, outer edges are flush and coplanar, and an integrally formed outer edge extending in a straight line can be adapted to a regular space of the accommodating cavity 11, and can also be adapted to an electrode sheet 60 of equal width. In a second aspect, the joints between the plurality of first infrared plates 51 and the joints between the plurality of second infrared plates 52 are all offset in the front-back direction, and it can be ensured that a position that is on the electrode sheet 60 and that is not baked at the joint of the first infrared plate 51 can be baked at the second infrared plate 52. In a third aspect, infrared plates of two specifications, the first infrared plate 51 and the second infrared plate 52, are used to satisfy a requirement, so that models, sizes, and the like of the infrared plate can be reduced, and scale benefits can be generated.

In other embodiments, the outer edges of the plurality of infrared plates in the left-right direction may not be flush and coplanar, for example, may be concave and convex, sequentially ascending, or sequentially descending. This is not limited.

In an embodiment, referring to FIG. 2, the first infrared plate 51 and the second infrared plate 52 are provided with gaps configured to arrange the air nozzles 30 in the front-back direction. With reference to FIG. 1, an infrared plate of only one specification is arranged between two adjacent air nozzles 30. Along the front-back direction, an arrangement sequence of the infrared plates and the air nozzles 30 is as follows: the first infrared plate 51, the air nozzle 30, the second infrared plate 52, the air nozzle 30, the first infrared plate 51, the air nozzle 30, the second infrared plate 52, ... .

In this embodiment, a gap between the first infrared plate 51 and the second infrared plate 52 that are adjacent to each other in the front-back direction should be greater than a size of the air nozzle 30 in the front-back direction. In other words, the infrared plate should not be in contact with the air nozzle 30. A mounting space needs to be reserved, to avoid mounting failure due to structural interference. In addition, the infrared plate expands when the infrared plate is heated, and a space is needed for the infrared plate to be extended.

During actual mounting, the infrared plate may be mounted between adjacent air nozzles 30, and the first infrared plate 51 and the second infrared plate 52 are sequentially mounted based on the foregoing sequence.

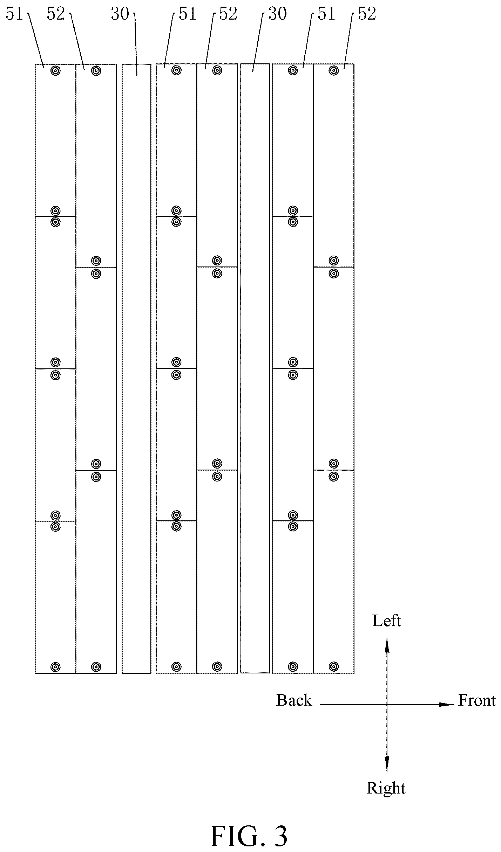

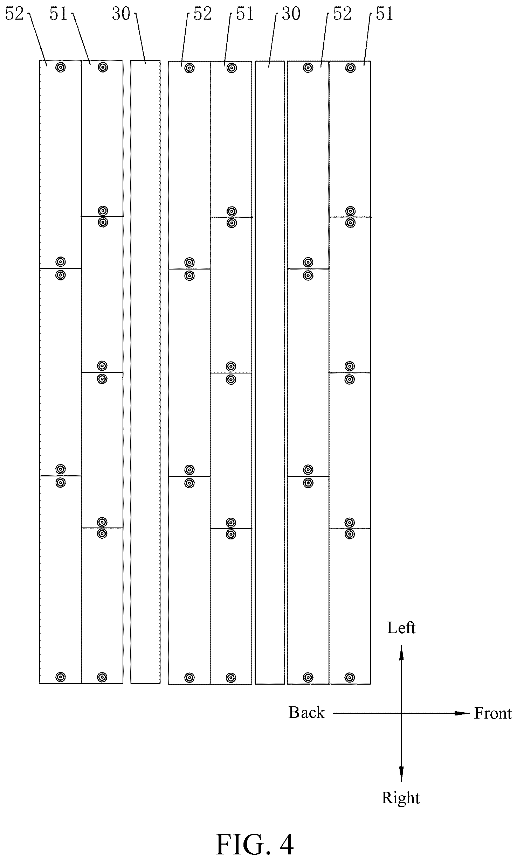

In an embodiment, referring to FIG. 3 and FIG. 4, the first infrared plate 51 and the second infrared plate 52 are connected in the front-back direction to form a group of infrared plate groups. The heating plate 50 is provided with the plurality of infrared plate groups along the front-back direction, and the gaps configured to arrange the air nozzles 30 are provided between adjacent infrared plate groups.

This embodiment is basically the same as the embodiment shown in FIG. 2. A difference is that the first infrared plate 51 and the second infrared plate 52 in FIG. 2 are spaced apart, and there is a gap for accommodating the air nozzles 30 between the first infrared plate 51 and the second infrared plate 52. In other words, there is only the first infrared plate 51 or the second infrared plate 52 between two adjacent air nozzles 30. In this embodiment, the first infrared plate 51 and the second infrared plate 52 are provided between two adjacent air nozzles 30 simultaneously. Referring to FIG. 3, along the front-back direction, an arrangement sequence of the infrared plates and the air nozzles 30 is as follows: the first infrared plate 51, the second infrared plate 52, the air nozzle 30, the first infrared plate 51, the second infrared plate 52, the air nozzle 30, the first infrared plate 51, the second infrared plate 52, the air nozzle 30, .... Referring to FIG. 4, along the front-back direction, an arrangement sequence of the infrared plates and the air nozzles 30 is as follows: ... the second infrared plate 52, the first infrared plate 51, the air nozzle 30, the second infrared plate 52, the first infrared plate 51, the air nozzle 30, the second infrared plate 52, the first infrared plate 51, the air nozzle 30, .... The embodiment shown in FIG. 4 is basically the same as the embodiment shown in FIG. 3. A difference is that the sequence of the first infrared plate 51 and the second infrared plate 52 in the embodiment shown in FIG. 4 is reversed from the sequence in the embodiment shown in FIG. 3.

In this embodiment, the first infrared plate 51 and the second infrared plate 52 in each infrared plate group may be connected in a connection manner such as clamping or adhering, or may be merely in contact with each other. This is not limited.

The infrared plate group is arranged to increase a quantity of infrared plates between two adjacent air nozzles 30. At the infrared plate group, when the electrode sheet 60 moves, a position of a joint that corresponds to the first infrared plate 51 and that is not heated and baked is heated and baked at the second infrared plate 52 connected to the first infrared plate 51, thereby avoiding a defect caused by that a position corresponding to a joint cannot be baked for a long time when the conveyor belt speed of the electrode sheet 60 is slow.

In other embodiments, referring to FIG. 3 or FIG. 4, along the front-back direction, an arrangement sequence of the infrared plates and the air nozzles 30 may further be as follows: the first infrared plate 51, the second infrared plate 52, the air nozzle 30, the second infrared plate 52, the first infrared plate 51, the air nozzle 30, the first infrared plate 51, the second infrared plate 52, the air nozzle 30, .... In other words, the infrared plate groups are not all the same. In some infrared plate groups, an arrangement sequence of the infrared plates along the front-back direction is as follows: the first infrared plate 51, and the second infrared plate 52. In some infrared plate groups, an arrangement sequence of the infrared plates along the front-back direction is as follows: the second infrared plate 52 and the first infrared plate 51.

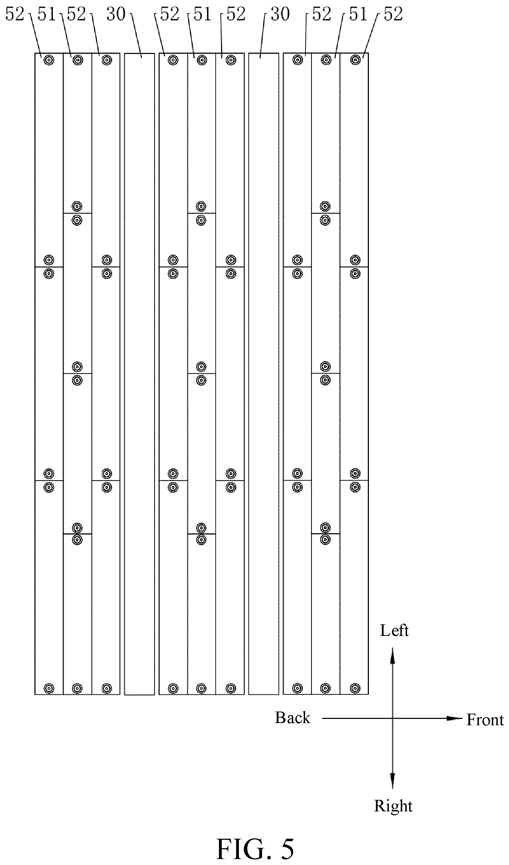

In an embodiment, referring to FIG. 5, the embodiment is basically the same as the embodiments shown in FIG. 3 and FIG. 4. A difference is that each infrared plate group includes the first infrared plate 51 and the second infrared plate 52 alternately arranged in the front-back direction.

In this embodiment, along the front-back direction, an arrangement sequence of the infrared plates and the air nozzles 30 is as follows: the second infrared plate 52, the first infrared plate 51, the second infrared plate 52, the air nozzle 30, the second infrared plate 52, the first infrared plate 51, the second infrared plate 52, the air nozzle 30, the second infrared plate 52, the first infrared plate 51, the second infrared plate 52, the air nozzle 30, .... In other words, the infrared plate group includes the second infrared plate 52, the first infrared plate 51, and the second infrared plate 52 that are sequentially arranged along the front-back direction.

In other embodiments, the infrared plate group may further include the first infrared plate 51, the second infrared plate 52, and the first infrared plate 51 that are sequentially arranged along the front-back direction.

In other embodiments, an arrangement sequence of the infrared plates of infrared plate groups between some of two adjacent air nozzles 30 is as follows: the second infrared plate 52, the first infrared plate 51, and the second infrared plate 52, and an arrangement sequence of the infrared plates of an infrared plate group between the remaining two adjacent air nozzles 30 is as follows: the first infrared plate 51, the second infrared plate 52, and the first infrared plate 51.

In other embodiments, a quantity of the infrared plates alternately arranged in the infrared plate group along the front-back direction is not limited to three, and may also be four, five, six, ..., and the like. This is not limited.

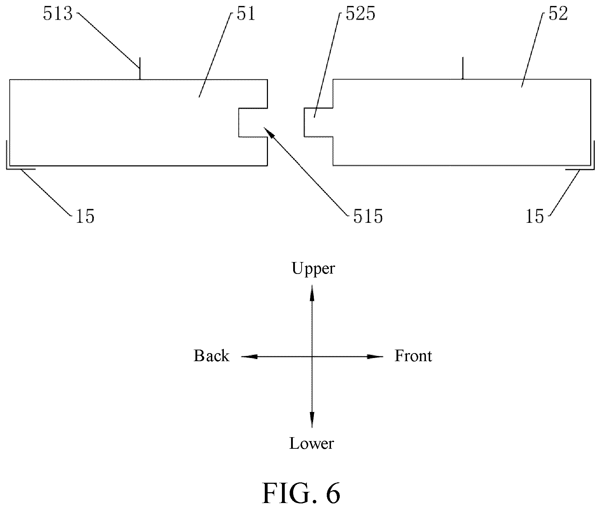

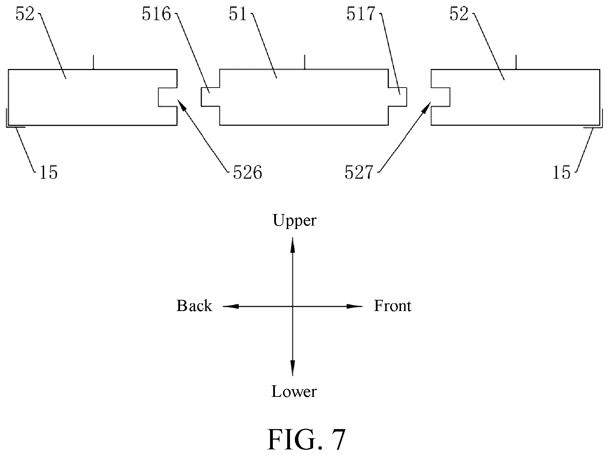

In an embodiment, referring to FIG. 6 and FIG. 7, the first infrared plate 51 and the second infrared plate 52 in each infrared plate group are detachably connected in the front-back direction.

Optionally, referring to FIG. 3 and FIG. 6, a frontward side wall of the first infrared plate 51 is provided with a first groove 515, and a backward side wall of the second infrared plate 52 is provided with a first protrusion 525. The first protrusion 525 is configured to be inserted into the first groove 515, to implement detachable connection between the first infrared plate 51 and the second infrared plate 52. During actual mounting, the first infrared plate 51 may be fixed in advance, and then the second infrared plate 52 is moved toward the first infrared plate 51 from the front to the back, so that the first protrusion 525 is inserted into the first groove 515. Certainly, the second infrared plate 52 may also be fixed in advance, and then the first infrared plate 51 is moved toward the second infrared plate 52 from the back to the front, so that the first groove 515 matches the first protrusion 525.

Optionally, referring to FIG. 5 and FIG. 7, a frontward side wall of the back second infrared plate 52 is provided with a second groove 526, a backward side wall of the front second infrared plate 52 is provided with a third groove 527, a frontward side wall and a backward side wall of the middle first infrared plate 51 are respectively provided with a second protrusion 516 and a third protrusion 517. The second protrusion 516 is configured to be inserted into the second groove 526, and the third protrusion 517 is configured to be inserted into the third groove 527, to implement detachable connection. During actual mounting, one of the infrared plates may be fixed in advance, and then the other two infrared plates are sequentially moved toward the infrared plate, so that the groove matches the protrusion. Details are not described again.

The first infrared plate 51 and the second infrared plate 52 that are detachably connected are arranged, so that the first infrared plate 51 and the second infrared plate 52 are stably connected to each other, performance such as anti-bending is improved, and structural reliability is improved. In addition, in the detachable connection manner, transportation can be facilitated during detachment, operations are facilitated during mounting, and repair and replacement can also be performed, so that the cost is reduced.

In other embodiments, the first infrared plate 51 and the second infrared plate 52 spliced in the left-right direction may also be detachably connected. Specifically, there are the plurality of first infrared plates 51, and the plurality of first infrared plates 51 are detachably connected in the left-right direction, and/or there are the plurality of second infrared plates 52, and the plurality of second infrared plates 52 are detachably connected in the left-right direction. For the detachable connection of the plurality of first infrared plates 51 and the detachable connection of the plurality of second infrared plates 52, refer to the embodiments shown in FIG. 6 and FIG. 7. Details are not described again. For beneficial effects of the detachable connection, refer to the foregoing descriptions. Details are not described again.

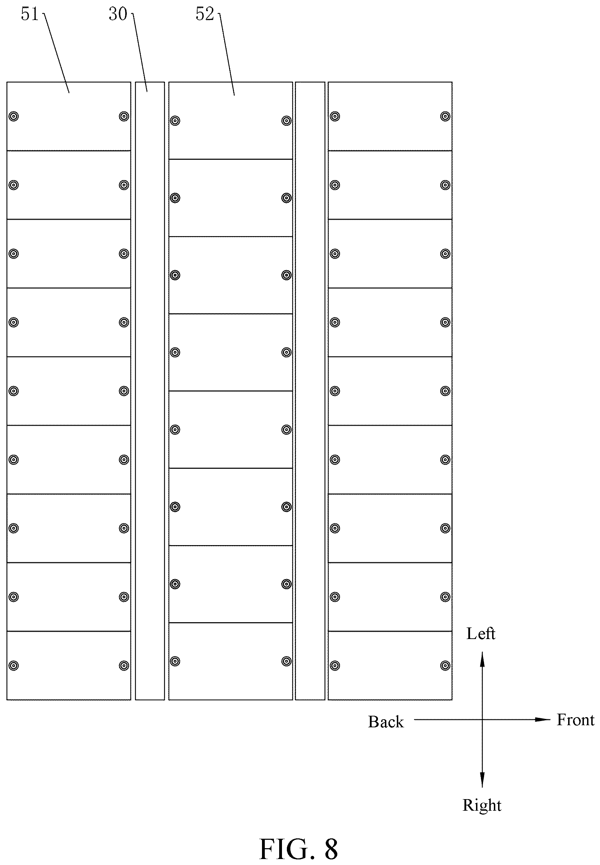

In an embodiment, referring to FIG. 8, the embodiment is basically the same as the embodiment shown in FIG. 2. A difference is that a length direction of the first infrared plate 51 in the embodiment shown in FIG. 2 is the left-right direction, and a length direction of the first infrared plate 51 in the embodiment shown in FIG. 8 is the front-back direction. A width direction of the first infrared plate 51 in FIG. 8 is the left-right direction. A length direction of the second infrared plate 52 is also the front-back direction, and this is consistent with the first infrared plate 51.

In this splicing manner, a joint between the first infrared plates 51 and a joint between the second infrared plates 52 are offset in the front-back direction, and problems of lack of baking and insufficient baking of the electrode sheet 60 can be resolved.

In the descriptions of the embodiments of the present disclosure, it should be noted that, an orientation or a position relationship indicated by the terms such as "center", "upper", "lower", "left", "right", "vertical", "horizontal", "inside", and "outside" is an orientation or a position relationship described based on the accompanying drawings, and is merely used to facilitate the descriptions of the present disclosure and simplifying the descriptions, rather than indicating or implying that a pointed apparatus or original needs to have a specific orientation, or needs to be constructed and operated in a specific orientation. Therefore, such terms cannot be constructed as a limitation on the present disclosure.

What is disclosed above is merely one exemplary embodiment of the present disclosure, and certainly is not intended to limit the protection scope of the present disclosure. A person of ordinary skill in the art may understand all or some procedures for implementing the foregoing embodiments, and equivalent variations made in accordance with the claims of the present disclosure shall fall within the scope of the present disclosure.

## Claims

1. A heating plate (50), the heating plate being configured to heat an electrode sheet (60), and the heating plate comprising a first infrared plate (51) and a second infrared plate (52); and
the first infrared plate and the second infrared plate being sequentially arranged along a first direction, the first infrared plate having a first edge (511) in a second direction, the second infrared plate having a second edge (521) corresponding to the first edge in the second direction, and the first edge and the second edge being offset in the first direction,
wherein the electrode sheet is configured to move in the first direction, a length direction of the electrode sheet is the first direction, and a width direction of the electrode sheet is the second direction.

2. The heating plate according to claim 1, wherein in the second direction, one first infrared plate is provided, a plurality of second infrared plates are provided, the plurality of second infrared plates are sequentially spliced in the second direction, and a size of the first infrared plate in the second direction is equal to a total size of the plurality of second infrared plates in the second direction.

3. The heating plate according to claim 1, wherein in the second direction, a plurality of first infrared plates and second infrared plates that have unequal quantities are provided, the plurality of first infrared plates are sequentially spliced in the second direction, the plurality of second infrared plates are sequentially spliced in the second direction, and a total size of the plurality of first infrared plates in the second direction is equal to a total size of the plurality of second infrared plates in the second direction.

4. The heating plate according to claim 2 or 3, wherein an edge of the first infrared plate at the outermost side in the second direction is flush and coplanar with a corresponding edge of the second infrared plate.

5. The heating plate according to claim 2 or 3, wherein the first infrared plate and the second infrared plate are provided with a gap configured to arrange an air nozzle (30) in the first direction.

6. The heating plate according to claim 2 or 3, wherein the first infrared plate and the second infrared plate are connected in the first direction to form an infrared plate group, the heating plate is provided with a plurality of infrared plate groups along the first direction, and a gap configured to arrange an air nozzle is provided between adjacent infrared plate groups.

7. The heating plate according to claim 6, wherein each infrared plate group comprises the first infrared plate and the second infrared plate alternately arranged in the first direction.

8. The heating plate according to claim 6, wherein the first infrared plate and the second infrared plate in each infrared plate group are detachably connected in the first direction.

9. The heating plate according to claim 1, wherein a plurality of first infrared plates are provided, and the plurality of first infrared plates are detachably connected in the second direction; and/or a plurality of second infrared plates are provided, and the plurality of second infrared plates are detachably connected in the second direction.

10. The heating plate according to claim 1, wherein a length direction of the first infrared plate is the first direction or the second direction.

11. A coater oven (100), comprising:
a tank (10), having an accommodating cavity (11);
an upper plenum (21) and a lower plenum (22), the upper plenum and the lower plenum being oppositely accommodated in the accommodating cavity; and
the heating plate (50) according to any one of claims 1 to 10, the heating plate (50) being arranged between the upper plenum and the lower plenum.

12. The coater oven according to claim 11, wherein a surface of the upper plenum facing the lower plenum is provided with a plurality of air nozzles (30) arranged and spaced apart, a surface of the lower plenum facing the upper plenum is provided with a plurality of air nozzles (30) arranged and spaced apart, and the heating plate is arranged between two adjacent air nozzles on the upper plenum and/or between two adjacent air nozzles on the lower plenum.

13. The coater oven according to claim 12, wherein the plurality of air nozzles on the upper plenum and the plurality of air nozzles on the lower plenum are offset in a third direction.

14. The coater oven according to claim 12, wherein an interval between two adjacent air nozzles is equal in the first direction.

15. The coater oven according to any one of claims 11 to 14, wherein the coater oven is provided with an input hole (12) and an output hole (13) extending between the inside and the outside; and an electrode sheet enters the accommodating cavity through the input hole, and exits from the output hole after being baked.
